# EUROPEAN PATENT SPECIFICATION

(11) **EP 2 504 151 B1**
(45) Date of publication and mention of the grant of the patent: **22.07.2015**
(21) Application number: 10816374.2
(22) Date of filing: 22.11.2010
(51) Int. Cl.: B29C 65/10, B29C 65/72, B29C 65/18, B29C 65/26, D06H 5/00, A41H 43/04, A41D 27/24

(54) **HEAT-SEALING MACHINE FOR ASSEMBLING TEXTILE ARTICLES OF MANUFACTURE AND METHOD ACHIEVED BY THE SAME**
HEISSSIEGELMASCHINE FÜR DIE MONTAGE VON TEXTILARTIKELN UND DAMIT AUSGEFÜHRTES VERFAHREN
MACHINE DE THERMOSOUDAGE PERMETTANT D'ASSEMBLER DES ARTICLES TEXTILES MANUFACTURÉS ET SON PROCÉDÉ DE MISE EN OEUVRE

(30) Priority: 27.11.2009 IT MI20092098
(43) Date of publication of application: 03.10.2012
(73) Proprietor: Fra-Ser S.P.A., 20124 Milano (IT)
(72) Inventor: PRIZZON, Luca, 20123 Milano (IT)
(74) Representative: Tansini, Elio Fabrizio
(86) International application number: PCT/IB2010/055328
(87) International publication number: WO 2011/064711

(56) References cited:
- EP-A1- 1 958 525
- EP-A2- 2 098 630
- WO-A1-01/81082
- WO-A1-99/56940
- WO-A1-03/053659
- CN-Y- 2 766 598
- DE-C1- 3 838 145
- GB-A- 1 342 962
- GB-A- 2 332 389
- JP-A- 2006 241 643
- US-A- 2 117 452
- US-A- 3 530 027
- US-A- 4 067 761
- US-A- 4 608 114
- US-A- 4 685 389
- US-B1- 7 267 154

## Description

### Technical Field

The present invention relates to a heat-sealing machine for assembling fabrics, of the type comprising the characteristic features expressed in the preamble of Claim 1. The invention also relates to a method for assembling fabrics, which can be implemented using the abovementioned heat-sealing machine.

The present invention can be used in particular in connection with industrial processes for joining together textile articles of manufacture such as fabrics, non-woven fabrics, synthetic membranes and the like, for the purposes of producing items of clothing or other articles which can be produced using said articles of manufacture. "Assembly" is understood as meaning, in addition to stable joining together of two or more textile articles of manufacture, fixing together of two layers of an article of manufacture folded onto itself, as occurs for example when forming hems of items of clothing.

### Background Art

The assembly of textile articles of manufacture by means of heat-sealing is at present performed with the aid of heat-sealing machines, for example of the type described in the document WO 2009/016669, in the name of the same Applicant, essentially comprising a conveying group provided with a conveying member in the form of a roller or motor-driven belt, co-operating with a conveying member in the form of an opposition counter-roller. The textile article of manufacture, which is formed by a first and a second textile layer to be joined together, is fed between the conveying member and the counter-roller acting in a zone for mutual joining of the layers.

In the mutual joining zone at least one of the layers has, on the surface facing the other layer, a thermoadhesive agent normally consisting of a heat-sealed strip. In the vicinity of the conveying group heating means operate on the article of manufacture in order to cause activation of the thermoadhesive agent. In particular, the heating means comprise essentially a heat convector designed to deliver a jet of hot air above the second layer, in the zone of entry of the article of manufacture between the conveying member and the counter-roller. The consequent heating results in activation of the thermoadhesive agent such as to cause stable joining together of the fabrics, assisted by the pressing action resulting from the forced passage of the layers between the conveying member and the counter-roller.

The Applicant has noted, however, that with use of the heat-sealing machines designed according to the prior art it is often difficult to obtain optimum joining together of the layers which form the article of manufacture. It has in fact been noted that the quality of the joint obtained is dependent upon numerous parameters, such as the temperature and the flowrate of the air delivered by the heat conveyor, the speed of feeding of the articles through the conveying group and the pressure exerted by the counter-roller.

Optimum adjustment of these parameters requires a considerable amount of experience and constitutes a factor of critical importance with regard to the quality of the result obtained.

The Applicant has also noted that the heat supplied by the heat conveyor must necessarily pass through the second layer before reaching the thermoadhesive agent. Therefore, the adjustment of the abovementioned parameters is influenced significantly also by the physical properties of the articles of manufacture being worked. In particular, the second layer forms a barrier preventing transmission of the heat to the thermoadhesive agent and therefore requires relatively large amounts of heat in order to achieve activation of the thermoadhesive agent, negatively influencing the efficiency of the joining action and penalizing the thermal efficiency and the working speed.

In many cases, especially when delicate materials are used, it even becomes impossible to achieve a satisfactory joint without damaging the article owing to the large amount of heat required.

Documents WO 01/81082, EP 2 098 630, EP 1958 525, WO 03/053659, WO 99/56940, GB 2 332 389, US 4 608 114, US 7 267 154, DE 38 38 145, JP 2006 241643, GB 1342 962, US 2 117 452, US 4 685 389, US 4 067 761, CN 2 766 598 and US 3 530 027, provide further examples of prior art sealing techniques.

### Disclosure of the Invention

In accordance with the present invention, the Applicant has realized that it is possible to overcome the limits and drawbacks of the prior art by eliminating the heat barrier consisting of the second layer in order to supply the heat to the thermoadhesive agent. It has thus been found that, by using a heat convector or other heat dispenser operating directly between the first and second layers in the zone of entry of the article of manufacture between the conveying member and the counter-roller, it is possible to achieve a substantial improvement in terms of working quality, productivity and simplification of the machine set-up operations, also when working materials with a low heat-resistance.

More particularly, these objects together with others, which will appear more clearly during the course of the present description, are substantially achieved by a heat-sealing machine for assembling fabrics, according to Claim 1 and/or the following Claims 2 to 10.

According to a further aspect, the invention also relates to a method for assembling fabrics, according to Claim 11 and/or one of the following Claims 12 to 14.

### Brief Description of the Drawings

Further characteristic features and advantages will appear more clearly from the detailed description of a preferred, but not exclusive embodiment of a heat-sealing machine for assembling textile articles of manufacture, according to the present invention.

Said description will be provided hereinbelow with reference to the accompanying drawings which are provided solely by way of a non-limiting example and in which:
- Figure 1 shows a schematic perspective view of a heat-sealing machine according to the present invention;

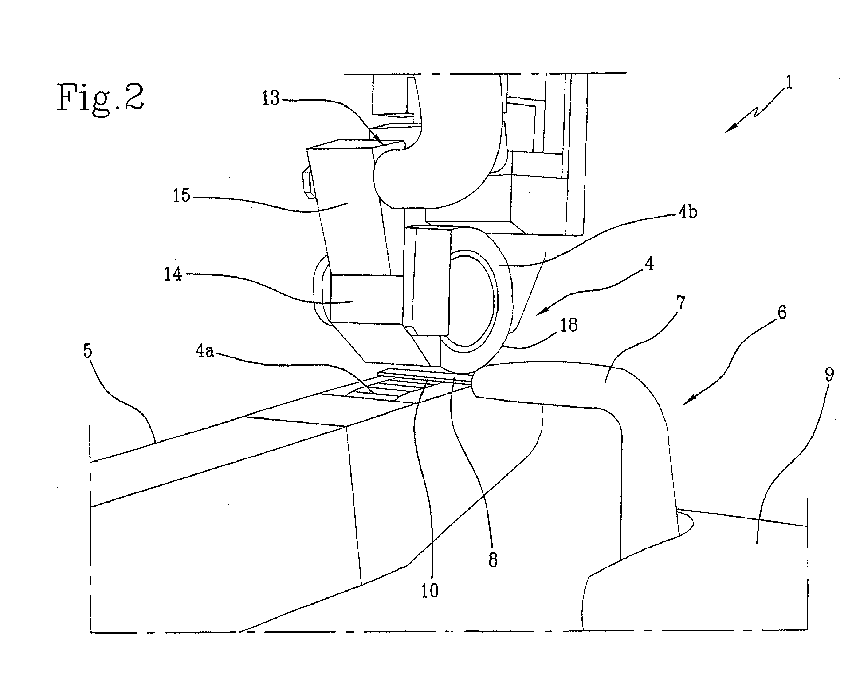

- Figure 2 shows a detail, on a larger scale, of Figure 1;

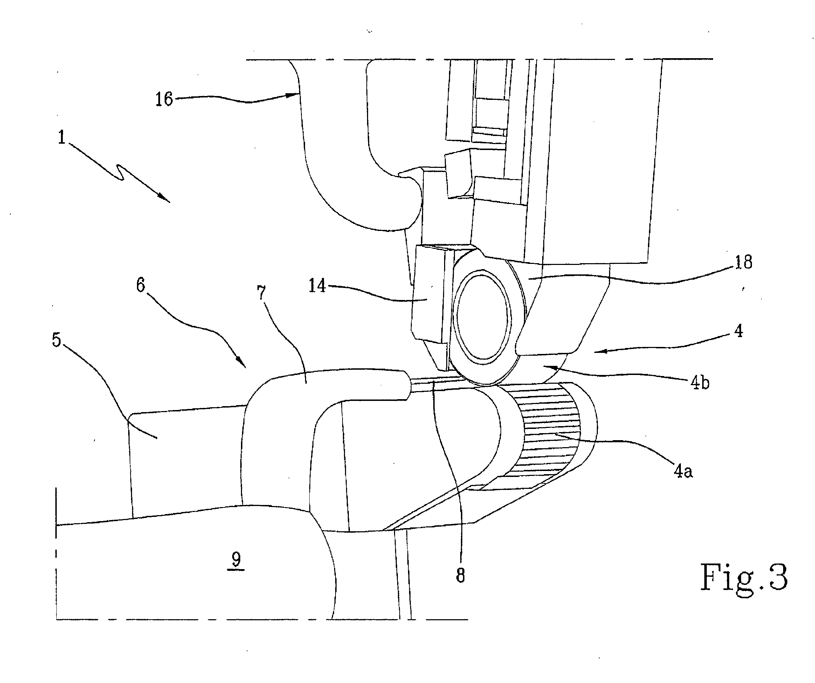

- Figure 3 shows a detail, on a larger scale, of Figure 1, from a different angle;

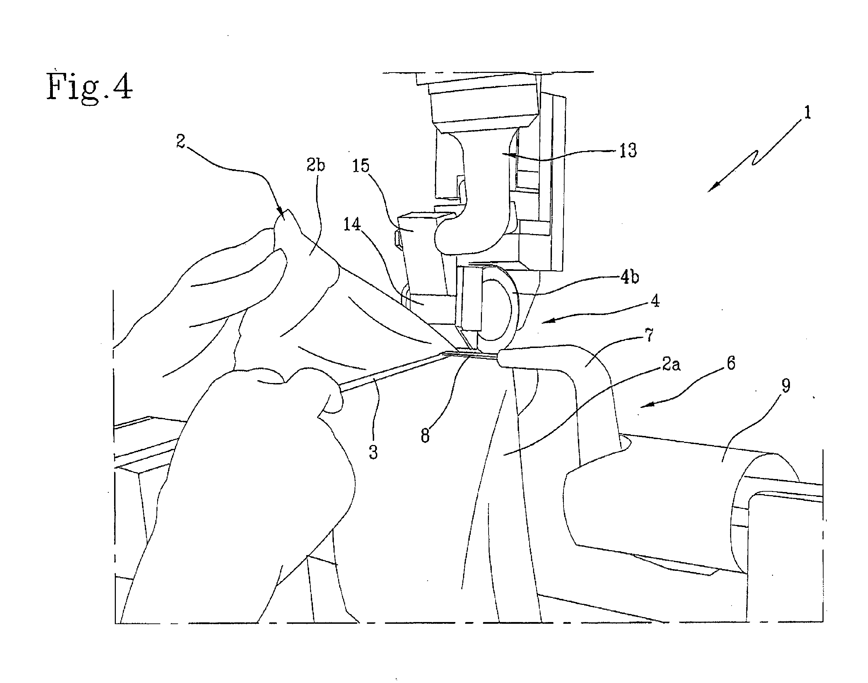

- Figure 4 shows a detail, on a larger scale, of Figure 1, in a given working condition;
- Figure 5 shows a detail, on a larger scale, of Figure 1, sectioned along a vertical plane.

### Detailed Description of the Preferred Embodiments of the Invention

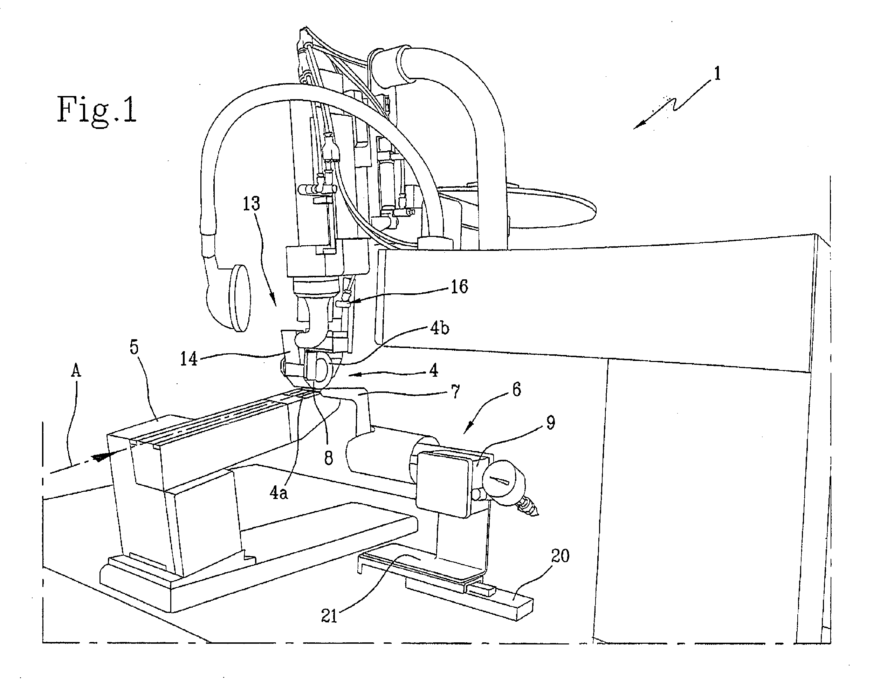

With reference to Figure 1, 1 denotes in its entirety a heat-sealing machine for assembling textile articles of manufacture 2. The term "textile article of manufacture" is understood as meaning the assembly consisting of a first textile layer (referred to below as "first layer 2a") and a second textile layer (referred to below as "second layer 2b") which are joined together by means of thermoadhesive element. For the purposes of the present description "textile layer" is understood as meaning a semifinished article made of fabric, non-woven fabric, synthetic material in the form of a membrane or other semifinished articles used in the clothing sector or in other areas of the textile industry. The thermoadhesive element 3 may in turn consist of a heat-sealed strip. The strip may have a substrate for example made of polyurethane which may be lined with a thermoadhesive component, for example also a polyurethane which has a melting temperature lower than that of the substrate, on one or both the surfaces for adhesion to the textile layers. During a first stage, a first surface of the strip is glued to the first layer, for example to the layer 2a. Then the second adhesive surface of the strip is exposed and joined to the second layer, for example the layer 2b, by means of the heat-sealing machine 1.

The heat-sealing machine 1 comprises a conveying group 4 comprising a first conveying member 4a co-operating with a second conveying member 4b for translation of the article of manufacture 2 being worked, in a predetermined feeding direction A (Fig. 1). The first and second layers 2a, 2b of the article of manufacture 2 being worked are interposed between the first and second conveying members 2a, 2b in a region of mutual junction of the layers themselves. At least one thermoadhesive element 3 is carried by at least one of the layers on the side facing the other layer in the region of mutual junction.

Preferably, the first and second conveying members 4a, 4b are arranged one above the other with the interposition of the article of manufacture 2 being worked sliding along a plane which is horizontal or inclined with respect to the horizontal.

For example, the conveying group 4 comprises a drive member 4a, co-operating with a counter-member 4b for translating the article of manufacture 2 being worked, in the predetermined feeding direction A. According to the preferred embodiment shown in Figure 1, the counter-member 4b is arranged above the drive member 4a. An alternative solution may also be envisaged where the counter-member 4b is arranged below the drive member 4a.

According to the preferred embodiment shown in Figure 1, the counter-member 4b is formed by means of an idle roller and the drive member 4a is formed by means of a belt wound around rollers at least one of which is motor-driven. Alternatively, the counter-member 4b may be formed by means of a belt wound around rollers. Alternatively also, the drive member 4a may be formed by means of a motor-driven roller.

Preferably the heat-sealing machine 1 comprises a guide 5 suitable for supporting the two layers of the article of manufacture 2 being worked with, interposed, the thermoadhesive element 3, so as to move towards the conveying group 4. The guide 5 is, for example, formed by means of a support surface which accompanies the article of manufacture 2 towards the conveying group 4. The first conveying member 4a is substantially incorporated in the guide 5 so as to operate flush therewith, and the second conveying member 4b is arranged above the guide 5.

The heat-sealing machine 1 also comprises a heating unit 6 operating in the region of the conveying group 4. The heating unit 6 is designed to cause activation of the thermoadhesive element 3 carried by at least one of the layers 2a, 2b on the side facing the other layer in the region of mutual junction.

Advantageously the heating unit 6 comprises a heat dispenser 7 operating between the first and second layers 2a, 2b so as to direct a thermal carrier flux directly against the thermoadhesive element 3. In particular, the thermal carrier flow is directed towards the conveying group 4. In particular, the heat dispenser 7 is inserted partly between the first and second textile layers 2a, 2b of the article of manufacture 2 being worked. Advantageously the heat dispenser 7 operates between the first and second layers 2a, 2b in a position immediately upstream of the conveying group 4.

Preferably, the heat dispenser 7 comprises a delivery nozzle 8 operatively connected to a hot-air generating unit 9.

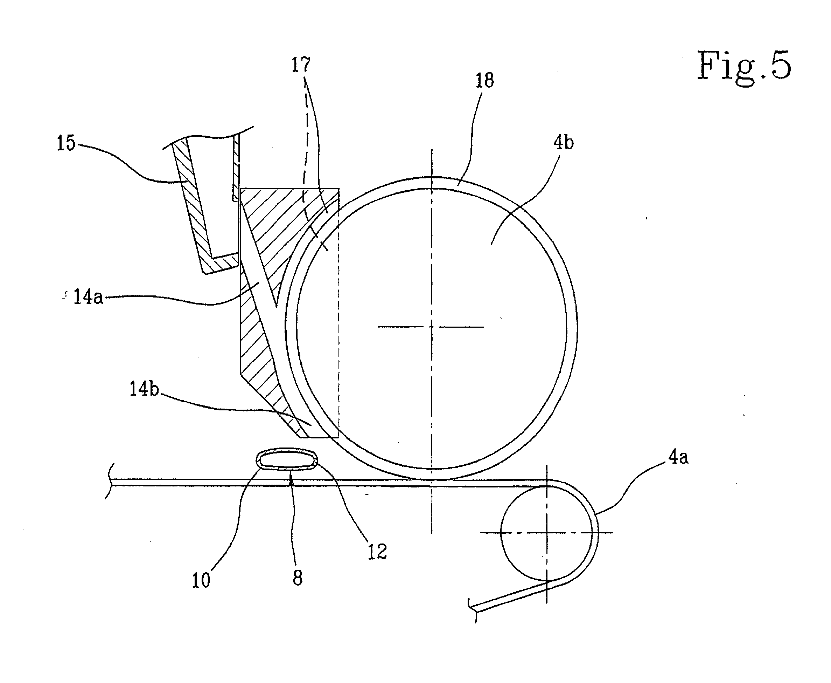

In particular the delivery nozzle 8 comprises a tubular element 10 having a longitudinal extension axis 11 substantially perpendicular to the feeding direction A of the article of manufacture 2 and having at least one outlet hole 12 oriented towards the conveying group 4 (Figure 5).

Preferably the delivery nozzle 8 is arranged laterally relative to the feeding direction A in the zone where the free end of the upper layer 2b is arranged. Advantageously the delivery nozzle 8 is arranged with its longitudinal axis 11 substantially horizontal or slightly inclined relative to the horizontal. In particular the delivery nozzle 8 is arranged with at least one end portion substantially parallel to the guide 5.

For example, the heat dispenser 7 may be transversely movable relative to the feeding direction A of the article of manufacture 2 being worked, preferably in a horizontal direction and/or substantially along its longitudinal axis. In particular, the dispenser 7 may be displaced, upon operation of an actuator 20 operating on a slide 21 carrying the dispenser itself, between an operating condition in which it is disposed upstream of the conveying group 4, with reference to the feeding direction A of the article of manufacture (as shown in the accompanying figures), and a rest condition in which it is laterally shifted relative to the conveying group 4 itself, so as not to hinder introduction of the article of manufacture 2 between the conveying members 4a, 4b during the initial stage of working. The term "laterally" is understood as meaning a position radially displaced relative to the feeding direction A of the article of manufacture. In the case illustrated, the dispenser 7 in the rest condition is laterally positioned to the right relative to the working condition shown.

As shown for example in Figure 1, the heating unit 6 also comprises a second heat dispenser 13 designed to direct a second thermal carrier flux towards the conveying group 4, in particular towards the drive member 4a and the counter-member 4b, above the article of manufacture 2 being worked.

For example, the second heat dispenser 13 comprises a fixed conveyor 14 operating close to the conveying group 4, and a second delivery nozzle 15 operatively connected to a hot-air generating unit 16. The delivery nozzle 15 is preferably movable between a rest condition in which it is laterally moved away from the conveying group 4, to the right thereof with reference to Figure 1, and a working condition in which it is operatively coupled to the fixed conveyor 14, as per the accompanying figures.

According to the preferred embodiment shown in the figures, the fixed conveyor 14 operates close to the conveying member arranged above. More particularly, the fixed conveyor 14 operates close to the counter member 4b.

Preferably, the fixed conveyor 14 has an inlet opening 14a adapted to receive the hot-air flow from the second delivery nozzle 15 positioned in the working condition and an outlet opening 14b which is situated facing above the article of manufacture 2 being worked and directs the hot-air jet towards at least one of the conveying members, in particular towards the counter-member 4b (Figure 6).

In particular, the fixed conveyor 14 is partially wrapped around at least one of the conveying members, preferably the counter-member 4b, and comprises an open seat 17 for receiving a portion of the conveying member. The open seat 17 is placed in communication with the inlet opening 14a for the hot-air flow and defines the outlet opening 14b of the fixed conveyor 14. In other words, the fixed conveyor 14 has a C-shaped form which partially embraces the conveying member, in particular the counter-member 4b, receiving the hot-ait flow from the outside via the inlet opening 14a and distributing it over the outer surface of the conveying member (Figure 6).

Preferably, at least one of the first and second conveying members 4a, 4b comprises an outer surface 18 suitable for acting against the article of manufacture 2 being worked and made of thermally conductive, preferably metallic, material. For example, the outer surface is made of copper.

Advantageously the conveying member having the abovementioned outer surface made of a thermally conductive, preferably metallic, material is the idly mounted counter-member 4b. In particular, the conveying member having the abovementioned outer surface made of a thermally conductive, preferably metallic, material is the member arranged above.

In the case where the fixed conveyor 14 is envisaged, it is preferable for this fixed conveyor 14 to operate close to the conveying member having the abovementioned outer surface 18 made of a thermally conductive, preferably metallic, material. As shown in Figure 1, the fixed conveyor 14 operates close to the counter-member 4b having the abovementioned outer surface 4b made of a thermally conductive material.

Alternatively or in addition the outer surface made of thermally conductive material may be provided on the drive member 4a. In this case also preferably this thermally conductive material is a metallic material. Even more preferably the drive member 4a acts against the article of manufacture 2 being worked, by means of an outer surface made of copper.

The heat-sealing machine 1 may also comprise control means which can be selectively activated for performing the movement, preferably the translation, of the heat dispenser 7 towards the respective operating condition, simultaneously or with a predetermined advance relative to operation of the conveying group 4. In other words, the control means induce heating of the article of manufacture by means of the heat dispenser 7 simultaneously or with a predetermined advance relative to operation of the conveying group 4.

Preferably it is envisaged providing control means which can be selectively activated for performing the movement of the second heat dispenser 13 towards the respective operating condition with a predetermined advance, preferably of between 1 and 5 seconds, relative to operation of the conveying group 4. In other words, the control means induce heating of the article of manufacture by means of the heat dispenser 13 with a predetermined advance relative to operation of the conveying group 4.

For example, a standard control unit forms the abovementioned control means which controls the movement both of the heat dispenser 7 and of the second heat dispenser 13, for example by means of operation of a pedal by the user.

With reference to the embodiment shown above, the operating principle of the heat-sealing machine is now described.

During a first stage. not further described, a first surface of the thermoadhesive element 3 is glued to the first textile layer 2a, for example the layer arranged underneath with reference to the figures. Then the second adhesive layer of the thermoadhesive element 3 is exposed and the second layer 2b (in the figure for example the upper layer) is partially superimposed on the first layer in the region of the thermoadhesive element 3.

The end portion of the article of manufacture 2 being worked is inserted between the two conveying members 4a, 4b, while an operator accompanies the two layers 2a, 2b along the guide 5 and operates the heat-sealing machine.

Upon operation of the heat-sealing machine, preferably the control means move the second heat dispenser 13 towards the respective operating condition with a predetermined advance, preferably of between 1 and 5 seconds, relative to operation of the conveying group 4. Then the heat dispenser 7 is moved and the conveying group 4 is operated.

The movement of the second heat dispenser 13 is preferably performed by means of angular oscillation about a fixed point, while the movement of the heat dispenser 7 is performed preferably by means of translation along a preferably horizontal plane. Variations of these forms of movement are, however, possible.

It should be noted that the heat dispensers are preferably always in operation in order to prevent activation delays, so that the displacement towards the article of manufacture coincides with activation of heating of the article of manufacture itself.

The hot-air flow of the second heat dispenser 13 surrounds the counter-member 4b and heats the outer surface 18 which improves the adhesion of the two layers 2a, 2b in the region of the front or end portion of the article of manufacture itself.

Then the second heat dispenser 13 continues to heat the counter-member 4b, but the main heating action for causing adhesion of the two layers 2a, 2b is performed by the heat dispenser 7 directly inserted between the two layers 2a, 2b of the article of manufacture. In this way the heat-sealing machine may be set up independently of the type of layers 2a, 2b being worked since the action of the heat flow does not pass through the upper layer but acts directly on the thermoadhesive element 3.

The conveying group 4 conveys the article of manufacture 2 being worked and exerts a simultaneous pressure which favours adhesion by the thermoadhesive element 3 heated immediately upstream of the conveying group 4 itself.

According to a further aspect, the present invention relates to a method for assembling textile articles, wherein a first and a second layer 2a, 2b of the article of manufacture 2 which overlap each other at least in a region of mutual junction are subjected to a heating action in the junction region for determining activation of a thermoadhesive element 3 provided on a surface of at least one of the layers 2a, 2b facing the other layer, for determining stable coupling of the layers 2a, 2b by the heat-activated thermoadhesive element 3.

The heating action is performed preferably in combination with a pressing action at least in the junction region.

In particular, the heating action is carried out by conveying thermal energy between the first and second layers 2a, 2b by means of at least one heat dispenser 13 interposed between the first and second layers 2a, 2b upstream of the conveying group 4 operating in the region of mutual junction so as to cause feeding of the layers 2a, 2b through a work region.

Preferably, the heating action is further carried out by conveying thermal energy with a second thermal carrier flux towards the conveying group 4. Preferably, the heating action is further carried out by conveying thermal energy with a second thermal carrier flux towards at least one of the conveying members and transferring it to the thermoadhesive element 3 by means of conduction using an outer surface, made of thermally conductive material, of the conveying member itself.

In particular, the second thermal carrier flux is conveyed towards the conveying group 4 with a predetermined advance, preferably of between 1 and 5 relative to operation of the conveying group 4.

Preferably, the thermal energy is conveyed between the first and second layers 2a, 2b by means of at least one heat dispenser 13 interposed between the first and second layers 2a, 2b upstream of the conveying group 4 simultaneously or with a predetermined advance relative to operation of the conveying group 4 itself.

As already stated previously, the original provision of a heat dispenser 13 operating between the first and second layers 2a, 2b so as to direct a thermal carrier flux directly towards the thermoadhesive element 3 allows an improvement in the heating efficiency and elimination of operating variables due to the type of layer used. This aspect is particularly advantageous in the case of a delivery nozzle 15 operatively connected to a hot-air generating unit 16 which forms a system which is simple, but in particular subject to the variables in question.

By designing the delivery nozzle 15 in the form of a tubular element having a longitudinal extension axis substantially perpendicular to a feeding direction of the article of manufacture 2 being worked and having at least one outlet hole oriented towards the conveying group 4, a solid, simple and effective structure able to direct the thermal flux directly onto the thermoadhesive element 3 between the two layers 2a, 2b, without introducing excessive complications, is obtained.

The provision of a movable heat dispenser 13 results in an improvement in the operating efficiency, since the heat dispenser 13 is kept always operational and heating of the article of manufacture is activated depending on its position.

The second heat dispenser 13 designed to direct a second thermal carrier flux towards the conveying group 4 improves and ensures generally more uniform adhesion of the two layers 2a, 2b, in particular along the end edge of the article of manufacture, not directly acted on by the flux of the heat dispenser 7 arranged directly between the two layers 2a, 2b.

The fixed conveyor 14 operating close to the conveying group 4 ensures optimized diffusion of the thermal flux over the conveying member and, with the aid of the continuous delivery, avoids delays during activation. Moreover, owing to the presence of a fixed conveyor 14, it is possible to design specifically a form of the fixed conveyor itself 14 suitable for distributing in an optimum manner the thermal flux over the conveying member.

This aspect is particularly advantageous in the case where further heating of the article of manufacture is performed by means of conduction, for example with the provision of an outer conducting surface of the conveying member. In general the provision of an outer conducting surface of the conveying member in any case offers advantages associated with the fact of being able to apply a pressure and perform corresponding heating in the zone which passes through the conveying member 4. In this way a uniform adhesion is obtained, without damaging the fabric as a result of excessive heating.

The abovementioned advantages also exist in the method for assembling textile articles as described above.

## Claims

1. A heat-sealing machine for assembling textile articles of manufacture, comprising:
- a conveying group (4) comprising a first conveying member (4a) co-operating with a second conveying member (4b) for translation of an article of manufacture (2) being worked in a predetermined feeding direction (A), said article of manufacture (2) comprising at least one first and one second layer (2a, 2b) adapted to be interposed between said first and second conveying members (4a, 4b) in a region of mutual junction of the layers themselves;
- a heating unit (6) operating in the region of the conveying group (4) for determining activation of at least one thermoadhesive element (3) carried by at least one of the layers (2a, 2b) on a side thereof facing the other layer (2a, 2b) in the region of mutual junction,
wherein said heating unit (6) comprises a heat dispenser (7) that is movable in a horizontal direction transversely relative to the feeding direction (A) of the article of manufacture (2) being worked, between an operating condition in which it is disposed upstream of the conveying group (4), with reference to the feeding direction (A) of the article of manufacture (2) and a rest condition in which it is laterally shifted relative to the conveying group itself,
wherein said heat dispenser (7) is adapted to operate between the first and second layers (2a, 2b) to direct a thermal carrier flux against the thermoadhesive element (3), wherein said heating unit further comprises a second heat dispenser (13) designed to direct a second thermal carrier flux towards said conveying group (4).

2. A machine as claimed in claim 1, wherein said heat dispenser (7) comprises a delivery nozzle (8) operatively connected to a hot-air generating unit (16), said delivery nozzle (8) comprising a tubular element (16) having a longitudinal extension axis (11) substantially perpendicular to said feeding direction (A) of the article of manufacture (2) being worked and provided with at least one outlet hole (12) oriented towards the conveying group (4).

3. A machine as claimed in claim 1, wherein said second heat dispenser (13) comprises a fixed conveyor (14) operating close to the conveying group (4) and a second delivery nozzle (15) operatively connected to a hot-air generating unit (16) and movable between a rest condition in which it is laterally moved away from said conveying group (4) and a work condition in which it is operatively coupled to the fixed conveyor (14).

4. A machine as claimed in the preceding claim, wherein said fixed conveyor (14) has an inlet opening (14a) adapted to receive the hot-air flow from said second delivery nozzle (15) in the work condition and an outlet opening (14b) directing the hot-air jet towards at least one of said conveying members (4a, 4b).

5. A machine as claimed in claim 3 or 4, wherein said fixed conveyor (14) is partly wrapped around at least one of said conveying members (4a, 4b) and comprises an open seat (17) for receiving a portion of said conveying member (4a, 4b), wherein said open seat (17) is put in communication with an inlet opening (14a) for the hot-air flow and wherein said open seat (17) defines an outlet opening (14b) of the fixed conveyor (14).

6. A machine as claimed in one or more of the preceding claims, wherein at least one of said first and second conveying members (4a, 4b) comprises an outer surface (18) of a thermally conductive metallic material, suitable for acting against the article of manufacture (2) being worked.

7. A machine as claimed in one of claims 3 to 5 and in claim 6, wherein said fixed conveyor (14) acts close to the conveying member (4a, 4b) having said outer surface (18) made of a thermally conductive metallic material.

8. A machine as claimed in claim 7, wherein said conveying member (4a, 4b) having said outer surface (18) of a thermally conductive metallic material is an idly-mounted counter-member.

9. A machine as claimed in claim 1, further comprising control means to be selectively activated for performing the movement of the heat dispenser (7) towards the respective operating condition, simultaneously with or with a pre-established advance relative to operation of the conveying group (4).

10. A machine as claimed in claim 3, further comprising control means to be selectively activated for performing the movement of the second heat dispenser (13) towards the respective operating condition with a predetermined advance relative to operation of the conveying group (4).

11. A method of assembling textile articles of manufacture, wherein a first and a second layer (2a, 2b) of the article of manufacture (2) that overlap each other at least in a region of mutual junction are submitted to a heating action in said junction region for determining activation of the thermoadhesive element (3) provided on a surface of at least one of the layers (2a, 2b) facing the other layer, for determining steady coupling of the layers (2a, 2b) by the heat-activated thermoadhesive element (3),
wherein said heating action is carried out by conveying thermal energy between the first and second layers (2a, 2b) by at least one heat dispenser (7) interposed between the first and second layers (2a, 2b) upstream of a conveying group (4) operating in the region of mutual junction to cause feeding of the layers (2a, 2b) through a work region, and wherein said heating action is further carried out by conveying thermal energy with a second thermal carrier flux towards said conveying group (4).

12. A method of assembling textile articles of manufacture as claimed in claim 11, wherein said heating action is further carried out by conveying thermal energy with the second thermal carrier flux towards at least one of the conveying members (4a, 4b) and transferring it to the thermoadhesive element (3) by conduction using an outer surface (18) of thermally conductive material of the conveying member (4a, 4b).

13. A method of assembling textile articles of manufacture as claimed in claim 11 or 12, wherein said second thermal carrier flux is conveyed towards said conveying group (4) with a predetermined advance, relative to operation of the conveying group (4).

14. A method of assembling textile articles of manufacture as claimed in anyone of claims 11 to 13, wherein said thermal energy is conveyed between the first and second layers (2a, 2b) by at least one heat dispenser (7) interposed between the first and second layers upstream of the conveying group (4) simultaneously with or with a pre-established advance relative to operation of the conveying group (4).

## Patentansprüche

1. Heißsiegelmaschine für die Montage von gefertigten Textilartikeln, umfassend:
- eine Fördergruppe (4), umfassend ein erstes Förderelement (4a), das mit einem zweiten Förderelement (4b) zusammenwirkt, zur Verschiebung eines zu bearbeitenden gefertigten Artikels (2) in eine vorgegebene Zuführrichtung (A), wobei der gefertigte Artikel (2) mindestens eine erste und eine zweite Schicht (2a, 2b) umfasst, die dazu geeignet sind, zwischen der ersten und zweiten Förderelemente (4a, 4b) in einem Bereich gegenseitiger Verbindung der Schichten selbst eingefügt zu werden;
- eine Erwärmungseinheit (6), die im Bereich der Fördergruppe (4) wirkt, zur Bewirkung der Aktivierung mindestens eines heißklebenden Elements (3), das durch mindestens eine der Schichten (2a, 2b) an einer Seite davon getragen ist, die im Bereich gegenseitiger Verbindung der anderen Schicht (2a, 2b) zugewandt ist, wobei die Erwärmungseinheit (6) einen Wärmespender (7) umfasst, der in eine horizontale Richtung quer zur Zuführrichtung (A) des zu bearbeitenden gefertigten Artikels (2), zwischen einem Betriebszustand, in dem er mit Bezug auf die Zuführrichtung (A) des gefertigten Artikels (2) der Fördergruppe (4) vorgelagert ist, und einem Ruhezustand, in dem er relativ zu der Fördergruppe selbst seitlich verschoben ist, bewegbar ist, wobei der Wärmespender (7) dazu geeignet ist, zwischen der ersten und zweiten Schichten (2a, 2b) zu wirken, um eine thermische Trägerströmung gegen das heißklebende Element (3) zu richten, wobei die Erwärmungseinheit zudem einen zweiten Wärmespender (13) umfasst, der dazu ausgestaltet ist, eine zweite thermische Trägerströmung auf die Fördergruppe (4) zu richten.

2. Maschine nach Anspruch 1, wobei der Wärmespender (7) eine Abgabedüse (8) umfasst, die mit einer Heißlufterzeugungseinheit (16) betriebswirksam verbunden ist, wobei die Abgabedüse (8) ein Rohrelement (16) umfasst, das eine Längsausdehnungsachse (11) aufweist, die im Wesentlichen senkrecht zur Zuführrichtung (A) des zu bearbeitenden gefertigten Artikels (2) ist, und das mit mindestens einem zur Fördergruppe (4) ausgerichteten Auslassloch (12) versehen ist.

3. Maschine nach Anspruch 1, wobei der zweite Wärmespender (13) einen festen Förderer (14), der in der Nähe der Fördergruppe (4) wirkt, und eine zweite Abgabedüse (15) umfasst, die mit einer Heißlufterzeugungseinheit (16) betriebswirksam verbunden ist und zwischen einem Ruhezustand, in dem diese von der Fördergruppe (4) seitlich wegführend bewegt wird, und einem Arbeitszustand bewegbar ist, in dem diese mit dem festen Förderer (14) betriebswirksam gekoppelt ist.

4. Maschine nach dem vorhergehenden Anspruch, wobei der feste Förderer (14) eine Einlassöffnung (14a), die dazu geeignet ist, in dem Arbeitszustand die Heißluftströmung von der zweiten Abgabedüse (15) aufzunehmen, und eine Auslassöffnung (14b), die den Heißluftstrahl auf mindestens eines der Förderelemente (4a, 4b) richtet, aufweist.

5. Maschine nach Anspruch 3 oder 4, wobei der feste Förderer (14) teilweise mindestens eines der Förderelemente (4a, 4b) umgibt und ein offenes Gehäuse (17) zur Aufnahme eines Abschnitts des Förderelements (4a, 4b) umfasst, wobei das offene Gehäuse (17) in Kommunikation mit einer Einlassöffnung (14a) für die Heißluftströmung gebracht wird und wobei das offene Gehäuse (17) eine Auslassöffnung (14b) des festen Förderers (14) definiert.

6. Maschine nach einem oder mehreren der vorhergehenden Ansprüche, wobei mindestens eines der ersten und zweiten Förderelemente (4a, 4b) eine aus thermisch leitfähigem Metallmaterial bestehende Äußerfläche (18) umfasst, die dazu geeignet ist, gegen den zu bearbeitenden gefertigten Artikel (2) einzuwirken.

7. Maschine nach einem der Ansprüche 3 bis 5 und nach Anspruch 6, wobei der feste Förderer (14) in der Nähe des Förderelements (4a, 4b), aufweisend die aus thermisch leitfähigem Metallmaterial bestehenden Äußerfläche (18), einwirkt.

8. Maschine nach Anspruch 7, wobei das Förderelement (4a, 4b), aufweisend die aus thermisch leitfähigem Metallmaterial bestehenden Äußerfläche (18), ein im Leerlauf montiertes Gegenelement ist.

9. Maschine nach Anspruch 1, zudem umfassend Steuermittel, die selektiv aktiviert werden können, um die Bewegung des Wärmespenders (7) zum jeweiligen Betriebszustand gleichzeitig mit oder auf vorgegebener Weise im Voraus relativ zum Betrieben der Fördergruppe (4) auszuführen.

10. Maschine nach Anspruch 3, zudem umfassend Steuermittel, die selektiv aktiviert werden können, um die Bewegung des zweiten Wärmespenders (13) zum jeweiligen Betriebszustand auf vorgegebener Weise im Voraus relativ zum Betrieben der Fördergruppe (4) auszuführen.

11. Verfahren für die Montage von gefertigten Textilartikeln, wobei eine erste und eine zweite Schicht (2a, 2b) des gefertigten Artikels (2), die sich aufeinander mindestens in einem Bereich gegenseitiger Verbindung überlappen, einer Heizwirkung im Verbindungsbereich unterzogen werden, um die Aktivierung des heißklebenden Elements (3), das sich auf einer Fläche mindestens einer der Schichten (2a, 2b) befindet, die der anderen Schicht (2a, 2b) zugewandt ist, zu bewirken, um eine stetige Verkopplung der Schichten (2a, 2b) durch das thermoaktivierte heißklebende Element (3) zu bewirken, wobei die Heizwirkung unter Beförderung thermischer Energie zwischen der ersten und zweiten Schichten (2a, 2b) durch mindestens einen der Fördergruppe (4) vorgelagerten, zwischen der ersten und zweiten Schichten (2a, 2b) eingefügten Wärmespender (7) durchgeführt wird, der im Bereich gegenseitiger Verbindung wirkt, um eine Zuführung der Schichten (2a, 2b) durch einen Arbeitsbereich zu verursachen, und wobei die Heizwirkung zudem unter Beförderung thermischer Energie mit einer zweiten thermischen Trägerströmung zur Fördergruppe (4) durchgeführt wird.

12. Verfahren für die Montage von gefertigten Textilartikeln nach Anspruch 11, wobei die Heizwirkung zudem unter Beförderung thermischer Energie mit der zweiten thermischen Trägerströmung zu mindestens einem der Förderelemente (4a, 4b) und unter Übertragung dieser auf das heißklebende Element (3) durch Leitung unter Nutzung einer aus thermisch leitfähigem Metallmaterial bestehenden Äußerfläche (18) des Förderelements (4a, 4b) durchgeführt wird.

13. Verfahren für die Montage von gefertigten Textilartikeln nach Anspruch 11 oder 12, wobei die zweite thermische Trägerströmung auf vorgegebener Weise im Voraus relativ zum Betrieben der Fördergruppe (4) zur Fördergruppe (4) befördert wird.

14. Verfahren für die Montage von gefertigten Textilartikeln nach einem der Ansprüche 11 bis 13, wobei die thermische Energie durch mindestens einen der Fördergruppe (4) vorgelagerten, zwischen der ersten und zweiten Schichten (2a, 2b) eingefügten Wärmespender (7) gleichzeitig mit oder auf vorgegebener Weise im Voraus relativ zum Betrieben der Fördergruppe (4) zwischen der ersten und zweiten Schichten (2a, 2b) befördert wird.

## Revendications

1. Machine de thermosoudage permettant d'assembler des articles textiles manufacturés, comprenant :
- un groupe transporteur (4) comprenant un premier organe transporteur (4a) coopérant avec un second organe transporteur (4b) pour la translation d'un article manufacturé (2) étant confectionné dans une direction d'alimentation prédéterminée (A), ledit article manufacturé (2) comprenant au moins une première et une seconde couche (2a, 2b) pouvant être intercalées entre lesdits premier et second organes transporteurs (4a, 4b) dans une zone de jonction mutuelle des couches elles-mêmes ;
- une unité de chauffage (6) fonctionnant dans la zone du groupe transporteur (4) pour déterminer l'activation d'au moins un élément thermo-adhésif (3) porté par au moins une des couches (2a, 2b) sur un côté de celle-ci orienté face à l'autre couche (2a, 2b) dans la zone de jonction mutuelle, dans laquelle ladite unité de chauffage (6) comprend un distributeur de chaleur (7) étant mobile dans une direction horizontale transversalement par rapport à la direction d'alimentation (A) de l'article manufacturé (2) étant confectionné, entre une condition de fonctionnement dans laquelle il est placé en amont du groupe transporteur (4), en faisant référence à la direction d'alimentation (A) de l'article manufacturé (2) et une condition de repos dans laquelle il est déplacé latéralement par rapport au groupe transporteur lui-même, dans laquelle ledit distributeur de chaleur (7) est adapté pour fonctionner entre les première et seconde couches (2a, 2b) pour orienter un flux caloporteur contre l'élément thermo-adhésif (3), dans laquelle ladite unité de chauffage comprend de plus un second distributeur de chaleur (13) conçu pour orienter un second flux caloporteur vers ledit groupe transporteur (4).

2. Machine selon la revendication 1, dans laquelle ledit distributeur de chaleur (7) comprend une buse de distribution (8) fonctionnellement reliée à une unité générant de l'air chaud (16), ladite buse de distribution (8) comprenant un élément tubulaire (16) ayant un axe d'extension longitudinal (11) substantiellement perpendiculaire à ladite direction d'alimentation (A) de l'article manufacturé (2) étant confectionné et pourvue d'au moins un orifice de sortie (12) orienté vers le groupe transporteur (4).

3. Machine selon la revendication 1, dans laquelle ledit second distributeur de chaleur (13) comprend un convoyeur fixe (14) fonctionnant à proximité du groupe transporteur (4) et une seconde buse de distribution (15) fonctionnellement reliée à une unité générant de l'air chaud (16) et mobile entre une condition de repos dans laquelle elle est éloigné latéralement dudit groupe transporteur (4) et une condition de fonctionnement dans laquelle elle est fonctionnellement accouplée au convoyeur fixe (14).

4. Machine selon la revendication précédente, dans laquelle ledit convoyeur fixe (14) possède une ouverture d'entrée (14a) adaptée pour recevoir le flux d'air chaud provenant de ladite seconde buse de distribution (15) dans la condition de fonctionnement et une ouverture de sortie (14b) orientant le jet d'air chaud vers au moins un desdits organes transporteurs (4a, 4b).

5. Machine selon les revendications 3 ou 4, dans laquelle ledit convoyeur fixe (14) est en partie enveloppé autour d'au moins un desdits organes transporteurs (4a, 4b) et comprend un siège ouvert (17) destiné à recevoir une partie dudit organe transporteur (4a, 4b), dans laquelle ledit siège ouvert (17) est mis en communication avec une ouverture d'entrée (14a) pour le flux d'air chaud et dans laquelle ledit siège ouvert (17) définit une ouverture de sortie (14b) du convoyeur fixe (14).

6. Machine selon l'une ou plusieurs des revendications précédentes, dans laquelle au moins un desdits premier et second organes transporteurs (4a, 4b) comprend une surface externe (18), en matériau métallique thermoconducteur, pouvant agir contre l'article manufacturé (2) étant confectionné.

7. Machine selon l'une des revendications de 3 à 5 et selon la revendication 6, dans laquelle ledit convoyeur fixe (14) agit à proximité de l'organe transporteur (4a, 4b) ayant ladite surface externe (18) en matériau métallique thermoconducteur.

8. Machine selon la revendication 7, dans laquelle ledit organe transporteur (4a, 4b) ayant ladite surface externe (18) en matériau métallique thermoconducteur est un contre-organe monté de façon inactive.

9. Machine selon la revendication 1, comprenant de plus des moyens de commande à activer de façon sélective afin d'effectuer le déplacement du distributeur de chaleur (7) vers la condition de fonctionnement respective, simultanément au fonctionnement du groupe transporteur (4) ou avec une avance prédéfinie par rapport à celui-ci.

10. Machine selon la revendication 3, comprenant de plus des moyens de commande à activer de façon sélective afin d'effectuer le déplacement du second distributeur de chaleur (13) vers la condition de fonctionnement respective avec une avance prédéfinie par rapport au fonctionnement du groupe transporteur (4).

11. Procédé permettant d'assembler des articles textiles manufacturés, dans lequel une première et une seconde couche (2a, 2b) de l'article manufacturé (2) qui se superposent l'une à l'autre au moins dans une zone de jonction mutuelle sont soumises à une action de chauffage dans ladite zone de jonction pour déterminer l'activation de l'élément thermo-adhésif (3) prévu sur une surface d'au moins une des couches (2a, 2b) faisant face à l'autre couche, afin de déterminer le couplage constant des couches (2a, 2b) par l'élément thermo-adhésif activé par la chaleur (3), dans lequel ladite action de chauffage est effectuée en acheminant l'énergie thermique entre les première et seconde couches (2a, 2b) par au moins un distributeur de chaleur (7) intercalé entre les première et seconde couches (2a, 2b) en amont d'un groupe transporteur (4) fonctionnant dans la zone de jonction mutuelle pour provoquer l'alimentation des couches (2a, 2b) à travers une zone de confection, et dans lequel ladite action de chauffage est de plus effectuée en acheminant l'énergie thermique grâce à un second flux caloporteur vers ledit groupe transporteur (4).

12. Procédé permettant d'assembler des articles textiles manufacturés selon la revendication 11, dans lequel ladite action de chauffage est de plus effectuée en acheminant l'énergie thermique grâce au second flux caloporteur vers au moins un des organes transporteurs (4a, 4b) et en la transférant à l'élément thermo-adhésif (3) par conduction en utilisant une surface externe (18) en matériau thermoconducteur de l'organe transporteur (4a, 4b).

13. Procédé permettant d'assembler des articles textiles manufacturés selon les revendications 11 ou 12, dans lequel ledit second flux caloporteur est acheminé vers ledit groupe transporteur (4) avec une avance prédéterminée par rapport au fonctionnement du groupe transporteur (4).

14. Procédé permettant d'assembler des articles textiles manufacturés selon l'une quelconque des revendications de 11 à 13, dans lequel ladite énergie thermique est acheminée entre les première et seconde couches (2a, 2b) par au moins un distributeur de chaleur (7) intercalé entre les première et seconde couches en amont du groupe transporteur (4) simultanément au fonctionnement du groupe transporteur (4) ou avec une avance prédéfinie par rapport à celui-ci.
